Europäisches Patentamt

European Patent Office

Office européen des brevets

(11) Veröffentlichungsnummer: **0 041 941**
**B1**

(12) **EUROPÄISCHE PATENTSCHRIFT**

(45) Veröffentlichungstag der Patentschrift:
07.03.84

(51) Int. Cl.³: **C 10 B 39/02** // F26B17/14

(21) Anmeldenummer: 81890089.6

(22) Anmeldetag: 26.05.81

(54) **Verfahren zur Regelung der Durchströmung eines Kühlbunkers.**

(30) Priorität: 06.06.80 AT 2983/80
06.06.80 AT 2984/80

(43) Veröffentlichungstag der Anmeldung:
16.12.81 Patentblatt 81/50

(45) Bekanntmachung des Hinweises auf die Patenterteilung:
07.03.84 Patentblatt 84/10

(84) Benannte Vertragsstaaten:
DE FR GB LU NL SE

(56) Entgegenhaltungen:
DE - A - 2 754 477
DE - C - 390 438
DE - C - 398 403

(73) Patentinhaber: WAAGNER-BIRO
AKTIENGESELLSCHAFT, Stadlauer-Strasse 54,
A-1221 Wien (AT)

(72) Erfinder: Beckmann, Georg, Dr., Jacquingasse 55/10,
A-1030 Wien (AT)

(74) Vertreter: Wallner, Gerhard, Dipl.-Ing., Waagner-Birò
Aktiengesellschaft Patentreferat Postfach 11,
A-1221 Wien (AT)

## Verfahren zur Regelung der Durchströmung eines Kühlbunkers

Die Erfindung betrifft ein Verfahren zur Regelung der Durchströmung eines Kühlbunkers für heisse Schüttgüter, bei dem das im Kühlbunker erhitzte Kühlgas in einem Wärmetauscher rückgekühlt und über ein Gebläse in den Kühlbunker über mindestens zwei Zuführungen rückgeführt wird, und eine Vorrichtung zur Kühlung von heissen Schüttgütern in einem Kühlbunker mit Zuführungen für das in einer Wärmerückgewinnungsanlage rückgekühlte Kühlgas, welches in Gasverteiler in der Nähe des Auslauftrichters an das heisse Schüttgut an mehreren Stellen abgegeben wird, und einer Zuführung für das heisse Schüttgut in den Kühlbunker zur Durchführung des Verfahrens.

Es ist bekannt, bei Kokstrockenkühlanlagen das Kühlgas mittels eines regelbaren Gebläses in den Kühlbunker einzublasen und das Gebläse entsprechend der notwendigen Kühlleistung zu regeln. Da es aber im Kühlbunker zu Entmischungen des mit unterschiedlicher Korngrösse anfallenden Schüttgutes kommt, erfolgt die Kühlung des Schüttgutes nicht gleichmässig, so dass im Auslauf des Kühlbunkers Temperaturunterschiede des Schüttgutes bis zu 200-300°C beobachtet wurden. Gleichzeitig weist das abströmende, heisse Kühlgas Strähnen mit Temperaturunterschieden auf, die etwa in der gleichen Grössenordnung liegen und die dann im Wärmetauscher zu Überhitzungen oder Schwankungen in der Wärmetauscherleistung führen. Um diese Nachteile zu beheben, wurde bereits vorgeschlagen, dem heissen Kühlgasstrom einen kalten Kühlgasstrom beizumischen, wodurch es aber zu einem Mischungsverlust kommt.

Zur Vermeidung dieser Nachteile ist es auch bereits vorgeschlagen worden, durch Anordnung einer Vorkammer das zu kühlende Koksvolumen zu vergleichmässigen, den Gasverteiler mehrteilig auszugestalten und mindestens einen Teil in die Randzone des Auslauftrichters zu verlegen. Die Vorkammer hat den Nachteil, dass sich oberhalb des Gasverteilers ein auf die Spitze gestellter Kegel ausbildet, in dessen Bereich der glühende Koks nicht gekühlt wird, da das Kühlgas nur in einer Ringzone abgesaugt wird. Das Kühlgas strömt im wesentlichen gerade von dem Gasverteiler zum Auslass, wobei durch die Anordnung des Randgasverteilers lediglich ein weiteres Kühlgasgassensystem durch die Koksschüttung erreicht wird, wodurch die Kühlverhältnisse nur geringfügig verbessert werden. Durch die Ausbildung des Kühlbunkers mit ausgasender Oberfläche wird die Gassenbildung reduziert, und das Kühlgas durchströmt einen Teil der Koksschüttung gleichmässig. Es ist aus der DE-C Nr. 398403 ein kegelförmiger Gasverteiler mit zylindrischem Fortsatz nach unten sowie einer zusätzlichen Gasaufgabe im Auslauftrichter bekannt. Die Spitze des Kegels des Gasverteilers ist in Richtung der Aufgabe des Schüttgutes in der Behandlungsanlage angeordnet. Dies bewirkt, dass das Schüttgut vom Gas in Richtung eines Parabelastes durchströmt wird, der in Richtung zur Bunkerwand verläuft. Diese Strömungsform wird durch die eintretende Entmischung des Schüttgutes verursacht, wonach das staubförmige Schüttgut längs der Achse des Bunkers und das grobkörnige Schüttgut mehr an der Wandung des Bunkers zur Ablagerung gelangt. Diese Strömungsverteilung bewirkt eine mangelnde Kühlung des feinen Schüttgutes und bewirkt Strähnenbildung im Schüttgut. Ungekühltes Schüttgut oder auch nur mangelhaft gekühltes Schüttgut gelangt in den Schüttgutaustrag. Dies ist besonders unangenehm bei Heisskokskühlern, weil die Glutnester einen Koksabbrand bewirken und schliesslich auch die nachgeschalteten Transporteinrichtungen beschädigen. Diese Nachteile können durch die zusätzlichen Massnahmen der DE-C Nr. 398403 nur gemildert, aber nicht behoben werden, da der untere Teil des Gasverteilers die Parabelbildung nur vergrössert, und da durch den Austrag infolge des erhöhten Durchströmungswiderstandes kaum nennenswerte Gasmengen durch die Schüttgutschüttung hindurchgebracht werden können, ist vielmehr anzunehmen, dass das Kühlgas mit dem Schüttgut entweicht.

Die Erfindung hat es sich zur Aufgabe gestellt, die Kühlung im gesamten Schüttgutbunkerquerschnitt zu verbleichmässigen. Zur Lösung der Aufgabe wurde dabei ein mehrteiliger Gasverteiler vorgesehen, bei dem die durchströmende Gasmenge erfindungsgemäss geregelt wird.

Die Erfindung ist dadurch gekennzeichnet, dass vom heissen Kühlgasstrom, insbesondere der vom Kühlgasstrom zuerst durchströmten Stufe des Wärmetauschers, ein Regelimpuls abgeleitet wird, der als Stellgrösse die Aufteilung des Kühlgasstromes auf die einzelnen Zuführungsleitungen zu den Gasverteilern steuert, und dass bei steigender Temperatur des vom Kühlbunker abströmenden Kühlgasstromes die Durchströmung der Randzone des Kühlbunkers erhöht wird und gleichzeitig die Durchströmung der Kernzone des Kühlbunkers erniedrigt wird. Weitere Verfahrensausgestaltungen sind in den Unteransprüchen 2 bis 4 angegeben.

Die erfindungsgemässe Vorrichtung zur Kühlung von heissen Schüttgütern in einem Kühlbunker mit Zuführungen für das in einer Wärmerückgewinnungsanlage rückgekühlte Kühlgas, welches in Gasverteiler in der Nähe des Auslauftrichters an das heisse Schüttgut an mehreren Stellen abgegeben wird, und einer Zuführung für das heisse Schüttgut in den Kühlbunker zur Durchführung des Verfahrens ist dadurch gekennzeichnet, dass in den Zuführungsleitungen des kalten Kühlgases zu den einzelnen Gasein- bzw. -austrittsöffnungen Regelventile vorgesehen sind, die einen Mindestkühlgasstrom und einen diesen übersteigenden, regelbaren Kühlgasstrom zur Durchströmung der einzelnen Gasverteiler bestimmen. Insbesondere weist der Gasverteiler die Form eines Trichters auf, dessen Öffnung an der Spitze in Richtung der Austragöffnung im Auslasstrichter angeordnet ist.

Durch die erfindungsgemässe Steuerung lässt sich die Durchströmung des Kühlbunkers verbessern und Strähnenbildung im heissen Kühlgas bzw. Glutnester im kalten Koks weitgehend vermeiden. Gleichzeitig wird durch die Mischung der beiden, unterschiedlich aufgegebenen Kühlgasströme eine Vergleichmässigung der abströmenden Kühlgastemperatur erreicht.

Die Erfindung ist in den Fig. 1 bis 5 beispielsweise und schematisch dargestellt. Es zeigen:

Fig. 1 in einem Schaltbild eine Kokstrockenkühlanlage,

Fig. 2 eine Konstruktionsvariante des in Fig. 1 dargestellten Gasverteilers,

Fig. 3 einen Gasverteiler, der nach innen und aussen Gas abgibt in einem Schnitt gemäss Schnittlinie III in Fig. 4,

Fig. 4 in einem Grundriss die Gaszuführung zu den einzelnen Teilen des Gasverteilers nach Fig. 3, und

Fig. 5 einen dreiteiligen Gasverteiler.

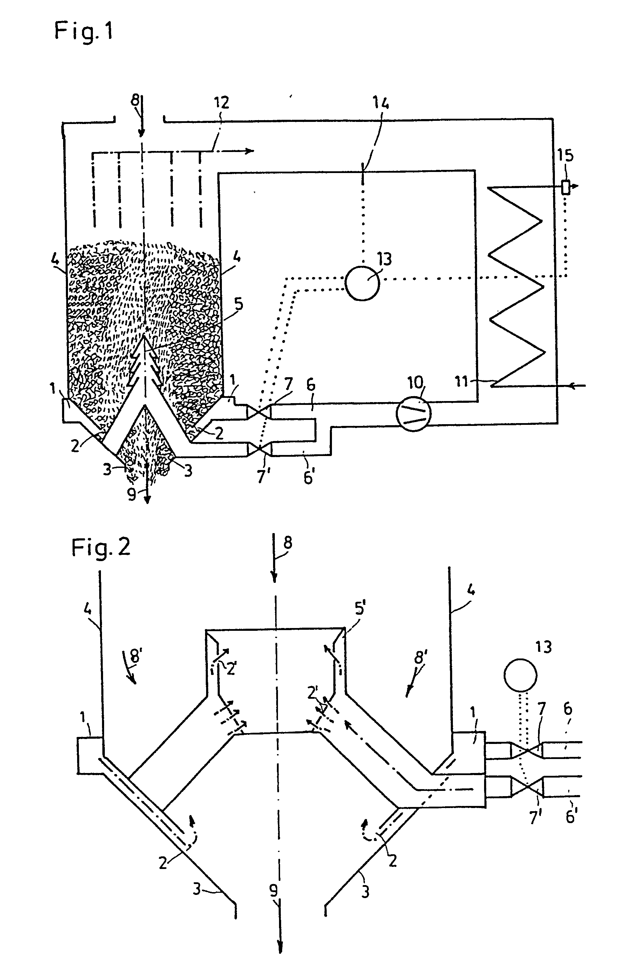

In Fig. 1 ist ein Kühlbunker 4 für glühenden Koks dargestellt, bei dem der glühende Koks bei Pfeil 8 eingeführt und im abgekühlten Zustand durch Pfeil 9 aus dem Kühlbunker 4 wieder entfernt wird. Das rückgekühlte Gas wird vom Austritt aus der Wärmerückgewinnungsanlage 11 über ein Gebläse 10 den einzelnen Gasverteilern 1 und 5 im Schüttgutbunker 4 zugeführt. Das erhitzte Kühlgas wird oberhalb des Schüttgutes gesammelt und gemäss Pfeil 12 der Wärmerückgewinnungsanlage 11 zugeführt. Die Zuführungsleitungen 6, 6′ zu den einzelnen Gasverteilern 1 und 5 weisen Regelventile 7, 7′ auf, die ihre Regelimpulse vom Messwertumformer 13 erhalten. Als Messwertgeber kann ein Temperaturfühler 14 oder eine Messeinrichtung 15 am Fluidaustritt der Wärmerückgewinnungsanlage 11 dienen. Die Messeinrichtung 15 kann bei einem Dampferzeuger die Dampftemperatur wie z.B. Überhitzungstemperatur oder bei entsprechender Regelung des Durchflusses auch die erzeugte Dampfmenge messen und als Regelimpuls dem Messwertumformer 13 zuführen. Der Gasverteiler im Kühlbunker besteht aus einem bekannten, kegelförmigen Gasverteiler 5, dessen Spitze dem Schüttgutstrom entgegenweist, und einem Gasverteiler 1, der im Auslauftrichter 3 des Schüttgutbunkers 4 vorgesehen ist und abgedeckte Gasaustrittsöffnungen 2 aufweist.

In Fig. 2 ist eine Konstruktionsvariante der Gasverteilung nach Fig. 1 dargestellt, wobei zwei Gasverteiler 1, 5′ angeordnet sind und der Gasverteiler 1, wie in Fig. 1, im Auslauftrichter 3 vorgesehen ist. Der Gasverteiler 5′, dessen Spitze in Richtung des abgekühlten Schüttgutes weist, ist hingegen trichterförmig ausgebildet. Das heisse Schüttgut wird in einen zentralen Teilstrom 8 im Bereich des Gasverteilers 5′ und einen ringförmigen, peripheren Teilstrom 8′ unterteilt, die beide über getrennte Gasverteiler gekühlt werden. Die Regelung der prozentuellen Aufteilung der zugeführten Gasmengen erfolgt ähnlich wie in Fig. 1 über die Regelventile 7, 7′ in den Gaszuleitungen 6, 6′. Der Gasverteiler 5′ wird gemäss Pfeil 8 von einem Teilstrom des zu kühlenden Schüttgutes durchströmt, wobei das Kühlgas durch Gasaustrittsöffnungen 2′ im Inneren des Gasverteilers aufgegeben wird. Der andere Teilstrom 8′ des Schüttgutes, der an der Aussenseite des Gasverteilers 5′ in einen ringförmigen Raum strömt, wird durch einen zweiten Gasverteiler 1, der im Auslasstrichter 3 des Schüttgutbunkers 4 vorgesehen ist, gekühlt. Über die Regelventile 7, 7′ kann auch der Zustand des die Schüttgutbehandlungseinrichtung verlassenden Gases gesteuert werden, so dass die nachgeschaltete Gasreinigungsanlage bzw. bei einer Kreislaufführung des Gases, dessen Wärmerückgewinnungsanlage unter günstigen Bedingungen betrieben werden kann.

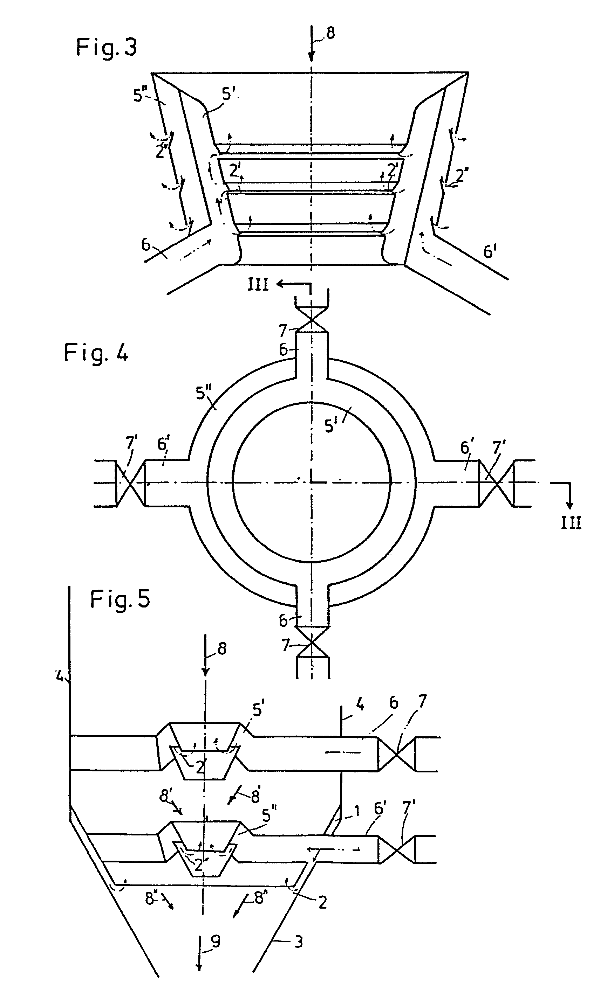

In Fig. 3 ist eine Konstruktionsvariante dargestellt, bei der der trichterförmige Gasverteiler zweiteilig ausgebildet ist, wobei der innere Teil 5′ Gasaustrittsöffnungen 2′ an der Kegelinnenseite und der äussere Teil 5″ Gasaustrittsöffnungen 2″ an der Kegelaussenseite aufweisen, so dass beide Teilströme 8, 8′ des Schüttgutes von einem Gasverteiler aus behandelt werden können.

In Fig. 4 ist die Gaszuführung für einen Gasverteiler nach Fig. 3 schematisch dargestellt. Die beiden Zuführungsleitungen 6, 6′ zu den Gasverteilern 5, 5′ bilden dabei ähnlich wie in Fig. 1 die Stützkonstruktion für den Gasverteiler 5, 5′ im Schüttgutstrom.

In Fig. 5 ist ein dreiteiliger Gasverteiler für Schüttgutbunker mit grossem Querschnitt dargestellt, bei welchem das Schüttgut in einem zentralen Teilstrom 8 und zwei äusseren Teilströmen 8′ und 8″ in unterschiedlichen Gasverteilern 1, 5′ und 5″ gekühlt wird. Der Gasverteiler 1 ist dabei ähnlich wie in Fig. 1 im Auslasstrichter 3 für den Randteilstrom 8″ angeordnet.

Die Erfindung eignet sich besonders zur Kühlung von Heisskoks in Trockenlöschanlagen; sie kann aber auch für andere heisse Schüttgüter verwendet werden. Ein weiterer Verwendungszweck liegt bei Trocknungsanlagen, bei welchen dann über die Regelventile 7, 7′ heisses Trocknungsgas dem Bunker 4 über die Gasverteiler zugeführt wird. Bei derartigen Anlagen muss allerdings im Bereich des abströmenden, nunmehr feuchten Gasstromes eine Flüssigkeitsabscheideeinrichtung vorgesehen werden, damit das Trocknungsgas entsprechend aufbereitet werden kann.

Durch die erfindungsgemässe Anordnung und Regelung von zwei Kühlgasauslässen im Kühlbunker wird der Wärmefluss verbessert, da das Kühlgas, welches durch die Randzone des Schüttgutes aufsteigt, naturgemäss kühler ist als jenes, welches in der Kernzone aufgegeben wird. Es wird bei steigender Temperatur des abströmenden, heissen Kühlgases der Kühlgasstrom durch die Randzone auf Kosten jener der Zentralzone erhöht, wodurch die Regelung der Kühlgastemperatur viel feinfühliger erfolgt und stets die volle Kühlgasmenge durch den Bunker geführt wird. Selbstverständlich kann diese Regelung auch mit der Regelung des Gebläses kombiniert werden.

## Patentansprüche

1. Verfahren zur Regelung der Durchströmung eines Kühlbunkers für heisse Schüttgüter, bei dem das im Kühlbunker erhitzte Kühlgas in einem Wärmetauscher rückgekühlt und über ein Kühlgebläse in den Kühlbunker über mindestens zwei Zuführungen rückgeführt wird, dadurch gekennzeichnet, dass vom heissen Kühlgasstrom, insbesondere in der vom Kühlgasstrom zuerst durchströmten Stufe des Wärmetauschers ein Regelimpuls abgeleitet wird, der als Stellgrösse die Aufteilung des Kühlgasstromes auf die einzelnen Zuführungsleitungen zu den Gasverteilern steuert, und dass bei steigender Temperatur des vom Kühlbunker abströmenden Kühlgasstromes die Durchströmung der Randzone des Kühlbunkers erhöht wird und gleichzeitig die Durchströmung der Kernzone des Kühlbunkers erniedrigt wird.

2. Verfahren nach Anspruch 1, dadurch gekennzeichnet, dass der Regelimpuls von einem im heissen Kühlgasstrom angeordneten Temperaturfühler abgeleitet wird.

3. Verfahren nach Anspruch 1, dadurch gekennzeichnet, dass der Regelimpuls von dem den Wärmetauscher durchströmenden Fluid, insbesondere vom erzeugten Dampf, vorzugsweise dessen Überhitzungstemperatur, abgeleitet wird.

4. Verfahren nach Anspruch 3, dadurch gekennzeichnet, dass der Regelimpuls aus der Menge des den Wärmetauscher durchströmenden Dampfes abgeleitet wird.

5. Vorrichtung zur Durchführung des Verfahrens nach mindestens einem der Ansprüche 1 bis 4 mit einem Kühlbunker mit Zuführungen für das in einer Wärmerückgewinnungsanlage rückgekühlte Kühlgas, welches in Gasverteiler in der Nähe des Auslauftrichters an das heisse Schüttgut an mehreren Stellen abgegeben wird, und einer Zuführung für das heisse Schüttgut in den Kühlbunker, dadurch gekennzeichnet, dass in den Zuführungsleitungen (6, 6') des kalten Kühlgases, zu den einzelnen Gasein- bzw. -austrittsöffnungen (2, 2') Regelventile (7, 7') vorgesehen sind, die einen Mindestkühlgasstrom und einen zweiten, diesen mengenmässig übersteigenden, regelbaren Kühlgasstrom zur Durchströmung der einzelnen Gasverteiler (1, 5, 5') bestimmen.

6. Vorrichtung nach Anspruch 5, dadurch gekennzeichnet, dass mindestens ein Gasverteiler (5'), der die Form eines Trichters aufweist, dessen Öffnung an der Spitze in Richtung der Austragöffnung im Auslasstrichter (3) angeordnet ist, im Auslasstrichter (3) des Bunkers vorgesehen ist.

7. Vorrichtung nach Anspruch 6, dadurch gekennzeichnet, dass der Gasverteiler (5') an der Kegelinnenseite Gasaustrittsöffnungen (2') aufweist.

8. Vorrichtung nach Anspruch 6, dadurch gekennzeichnet, dass der Gasverteiler (5') zweiteilig ausgebildet ist und an der Kegelinnenseite und an der Kegelaussenseite Gasaustrittsöffnungen (2', 2'') aufweist.

## Claims

1. Process for regulating the flow through a cooling bunker for hot bulk materials, in which process the cooling gas, which has been heated in the cooling bunker, is cooled again in a heat exchanger and is recycled, *via* a fan and at least two supply lines, into the cooling bunker, characterised in that a control pulse is derived from the hot stream of cooling gas, in particular in the heat-exchanger stage through which the stream of cooling gas initially flows, this control pulse serving as control for the distribution of the gas stream of cooling gas to the individual supply lines leading to the gas distributors, and in that, when the temperature of the stream of the cooling gas flowing out of the cooling bunker rises, the flow through the edge zone of the cooling bunker is increased and, at the same time, the flow through the core zone of the cooling bunker is reduced.

2. Process according to claim 1, characterised in that the control pulse is derived from a temperature sensor, which is located in the hot stream of cooling gas.

3. Process according to claim 1, characterised in that the control pulse is derived from the fluid which is flowing through the heat exchanger, in particular from the steam which is generated, preferably from the superheat temperature of the said steam.

4. Process according to claim 3, characterised in that the control pulse is derived from the rate at which the steam is flowing through the heat exchanger.

5. An installation for carrying out the process according to any one of claims 1 to 4 consisting of a cooling bunker with supply lines for the cooling gas, which has been recooled in a heat-recovery system, and is generated through gas distributors close to the discharge hopper into the hot bulk material at various points, as well as a supply line for the hot bulk material into the cooling bunker, characterised in that regulating valves (7, 7') are provided in the lines (6, 6') supplying the cold cooling gas to the individual gas inlet and outlet ports (2, 2'), said valves defining a minimum stream of cooling gas which exceeds the first stream in terms of flowrate, and which is capable of being regulated and is intended to flow through the individual portions of the gas distributor (1, 5, 5').

6. An installation according to claim 5, characterised in that at least one gas distributor (5') is provided in the discharge hopper (3) of the bunker, said gas distributor having the form of the surface of a truncated cone, with its narrower opening towards the discharge port (3) of the bunker.

7. An installation according to claim 6, characterised in that the gas distributor (5') possesses gas outlet ports (2') on the inner conical surface.

8. An installation according to claim 6, characterised in that the gas distributor (5') possesses two portions and is provided with gas outlet ports (2, 2') on the inner and the outer face of the cone.

## Revendications

1. Procédé de réglage de l'écoulement à travers une soute de refroidissement pour produits déversables chauds, dans lequel le gaz refroidisseur, chauffé dans la soute de refroidissement, est refroidi en retour dans un échangeur de chaleur et ramené par l'intermédiaire d'un ventilateur soufflant de refroidissement dans la soute de refroidissement par l'intermédiaire d'au moins deux conduites de retour, caractérisé en ce que du courant de gaz refroidisseur chaud, en particulier dans l'étage de l'échangeur de chaleur traversé d'abord par le courant de gaz refroidisseur, est dérivée une impulsion de réglage qui commande, en tant que grandeur de réglage, la répartition du courant de gaz refroidisseur sur les diverses conduites d'amenée aux distributeurs de gaz, et en ce que, lors d'une température croissante du courant de gaz refroidisseur s'évacuant par écoulement de la soute de refroidissement, l'écoulement de traversée de la zone marginale de la soute de refroidissement est augmenté et, simultanément, l'écoulement de traversée de la zone du cœur de la soute de refroidissement est abaissé.

2. Procédé selon la revendication 1, caractérisé en ce que l'impulsion de réglage est dérivée d'une sonde de température disposée dans le courant de gaz refroidisseur chaud.

3. Procédé selon la revendication 1, caractérisé en ce que l'impulsion de réglage est dérivée du fluide s'écoulant à travers l'échangeur de chaleur, en particulier de la vapeur produite, de préférence de sa température de surchauffe.

4. Procédé selon la revendication 3, caractérisé en ce que l'impulsion de réglage est dérivée de la quantité de la vapeur s'écoulant à travers l'échangeur de chaleur.

5. Dispositif pour l'exécution du procédé selon au moins l'une des revendications 1 à 4, avec une soute de refroidissement à conduites d'amenée pour le gaz refroidisseur refroidi en retour dans une installation de récupération de chaleur, lequel est délivré, en plusieurs emplacements, au produit déversable chaud dans des distributeurs de gaz dans le voisinage de la trémie de sortie et avec une amenée pour le produit déversable chaud dans la soute de refroidissement, caractérisé en ce que, dans les conduites d'amenée (6, 6') du gaz refroidisseur froid aux divers orifices d'entrée et de sortie de gaz (2, 2'), sont prévues des vannes de régulation (7, 7') qui déterminent un courant de gaz refroidisseur minimal et un second courant de gaz refroidisseur réglable excédant celui-ci quantitativement pour l'écoulement à travers les divers distributeurs de gaz (1, 5, 5').

6. Dispositif selon la revendication 5, caractérisé en ce que, au moins un distributeur de gaz (5'), qui présente la forme d'un entonnoir dont l'ouverture est disposée à la pointe en direction de l'orifice d'évacuation dans la trémie de sortie (3), est prévu dans la trémie de sortie (3) de la soute.

7. Dispositif selon la revendication 6, caractérisé en ce que le distributeur de gaz (5') présente des orifices de sortie de gaz (2') sur la face interne du cône.

8. Dispositif selon la revendication 6, caractérisé en ce que le distributeur de gaz (5') est réalisé en deux parties et en ce qu'il présente des orifices de sortie de gaz (2', 2'') sur la face interne du cône et sur la face externe du cône.

Fig. 1

Fig. 2

Fig. 3

Fig. 4

Fig. 5